# EUROPÄISCHE PATENTSCHRIFT

(11) **EP 0 766 264 B1**
(45) Veröffentlichungstag und Bekanntmachung des Hinweises auf die Patenterteilung: **08.03.2000**
(21) Anmeldenummer: 96114959.8
(22) Anmeldetag: 18.09.1996
(51) Int. Cl.: G21C 9/016

(54) **Kernreaktoranlage mit Kühleinrichtung für Kernschmelzenfänger**
Nuclear reactor installation comprising a cooling device for a molten core catcher
Installation d'un réacteur nucléaire ayant un dispositif de refroidissement pour un récupérateur d'un coeur fondu

(30) Priorität: 29.09.1995 DE 19536532
(43) Veröffentlichungstag der Anmeldung: 02.04.1997
(73) Patentinhaber: SIEMENS AKTIENGESELLSCHAFT, 80333 München (DE)
(72) Erfinder: Wistuba, Lothar, Dipl.-Ing., 91074 Herzogenaurach (DE); Bittermann, Dietmar, Dipl.-Ing., 90765 Fürth (DE); Hollmann, Josef, 96132 Schlüsselfeld (DE); Fischer, Manfred, Dipl.-Ing., 91054 Erlangen (DE)

(56) Entgegenhaltungen:
- EP-A- 0 533 529
- EP-A- 0 563 739
- DE-A- 2 625 357
- DE-A- 4 319 094
- DE-C- 19 512 287
- FR-A- 2 435 784

## Beschreibung

Die Erfindung betrifft eine Kernreaktoranlage mit einem Reaktordruckbehälter und einer Einrichtung zum Auffangen von Kernschmelze gemäß dem Oberbegriff des Anspruchs 1 (EP-0 563 739 A1).

Aus der DE 43 19 094 A1 ist eine Einrichtung zum Auffangen und Kühlen von Kernschmelze eines Reaktordruckbehälter (RDB) bekannt, bei der unterhalb des RDB eine Vorkammer angeordnet ist, die über einen Kanal mit einer Ausbreitungskammer in Verbindung steht. Die Vorkammer ist etwa kegelstumpfförmig ausgebildet und ist nach unten hin von einem feuerfesten Sockel begrenzt, der quasi als Tiegel dient. Der Sockel soll aus einer feuerfesten Keramik oder speziellen Steinen hergestellt sein. Der Boden der Ausbreitungskammer ist mit einem wärmeresistenten Material belegt.

Aus der DE-OS 2 234 782 ist ein Reaktorkernbehälter bekannt, bei dem unterhalb der Brennelemente eine Wanne zum Auffangen des Kerns im Falle einer Kernschmelze angeordnet ist. Zum Abkühlen ist die Wanne auf der dem Kern abgewandten Seite nach Art eines Kühlkörpers rippenartig ausgestaltet und mit dem Wasser eines Kühlkreislaufs in Kontakt. Auf diese Weise kann die Kernschmelze abgekühlt werden. Die Wanne ist dabei innerhalb des RDBs angeordnet.

Aus der EP 0 563 739 A1 ist eine Kernreaktoranlage mit einem wassergekühlten Reaktor bekannt, bei der das unterhalb des RDBs angeordnete Fundament mit groben Kühlkanälen durchsetzt ist, die mit einem Wasservorrat in einem Auffangbecken kommunizieren.

Aus der DE-OS 26 25 357 ist eine Kernreaktoranlage mit einem Reaktordruckbehälter bekannt, der von einer Betonstruktur umgeben ist, welche auf einem Betonfundament (wie bei der DE 43 19 739 A1) ruht. In dem Betonfundament sind Kühlkanäle angeordnet.

Die Anordnungen nach dem Stand der Technik sehen zwar das Auffangen der Kernschmelze vor, weisen jedoch keine optimale Kühlung der Kernschmelze auf. In der deutschen Patentanmeldung 195 12 287.9 ist ein Sockelkörper aus einem Material hoher Wärmeleitfähigkeit mit einer Vorkammer vorgeschlagen, wobei Sockelkörper und Vorkammer an ihrer Unterseite im Bereich der darunterliegenden Betonstruktur von Kühlrohren durchsetzt sind.

Der Erfindung liegt die Aufgabe zugrunde eine Kernreaktoranlage mit einer Einrichtung zum Auffangen von Kernschmelze anzugeben, bei der zum Schutz des Sockelkörpers und des Bodens der Vorkammer eine ausreichende Kühlung bei einfacher Herstellbarkeit gegeben ist.

Die Aufgabe wird erfindungsgemäß gelöst mit einer Kernreaktoranlage gemäß den Merkmalen des Anspruchs 1.

Auf diese Weise ist eine thermische Überlastung oder Zerstörung des Sockelkörpers und eine Penetration seiner Sohlplatte vermieden. Dies gilt besonders für den Langzeitbereich. Darüber hinaus ist die Einbringung der Kühlrohre sehr einfach, da sie in den einfachen Konstruktionsbeton der unter dem Sockelkörper befindlichen Betonstruktur eingelassen werden. Der aufwendig hergestellte Sockelkörper kann dann einfach darüber angeordnet werden.

Mit Vorteil sind die Kühlrohre endseitig mit einem Behälter für Kühlflüssigkeit verbunden. Dadurch ist eine passive Kühlung ohne zusätzliche Energiezufuhr oder sonstigen Einrichtungen möglich. Die Kühlung arbeitet dabei ständig und ist nahezu ausfallsicher. Als Kühlmittel findet bevorzugt Wasser Anwendung.

Die Kühlrohre können jeweils mit ihrem einen Ende unterhalb des Wasserspiegels und mit ihrem anderen Ende oberhalb des Wasserspiegels im Behälter enden. Dadurch ist die Richtung des Kühlmittelflusses vorgegeben. Das verdampfende Kühlmittel strömt dabei in Richtung des geringsten Widerstandes. Im Behälter kann das Kühlmittel kondensieren und so wieder dem Kühlkreislauf zugeführt werden.

Die Kühlrohre können dabei nebeneinander parallel liegen und wechselweise eine unterschiedliche Durchflußrichtung haben. Damit ist eine gleichmäßige Wärmeverteilung in der kühlenden Schicht gegeben.

Der Behälter kann den zu kühlenden Bereich des Sockelkörpers und der Ausbreitungskammer in Umfangsrichtung zumindest teilweise umschließen. Auf diese Weise ist ein kompakter Aufbau der Kühleinrichtung im Reaktorgebäude möglich. Es ist dadurch eine zentrale Kühlmittelzufuhr gegeben.

Es ist von Vorteil, wenn die Kühlrohre den zu kühlenden Bereich etwa gerade oder bogenförmig durchsetzen, wobei die beiden jeweiligen Enden der jeweiligen Kühlrohre auf gegenüberliegenden Seiten des zu kühlenden Bereichs im Behälter enden. Damit gestaltet sich die Verarbeitung und Verlegung der Kühlrohre besonders einfach, wobei deren Anordnung übersichtlich ist.

Die Rohre können den zu kühlenden Bereich auch etwa U-förmig durchsetzen, wobei ihre beiden Enden auf derselben Seite des zu kühlenden Bereichs im Behälter enden. Die Kühlrohre lassen sich dadurch bei einer Vorfertigung durch die Verkürzung gegenüber einer gestreckten Ausführung besser verarbeiten. Gegebenenfalls kann bei einer Zuordnung von einzelnen Rohrgruppen zu einzelnen Behältern eine günstige Aufteilung der Kühlkreisläufe erfolgen.

Die Kühlrohre können zumindest teilweise geneigt verlegt sein. Auf diese Weise ist der Kühlmittelfluß in den Kühlrohren begünstigt. Der Beton, insbesondere des Sockelkörpers, ist bevorzugt feuerfest ausgeführt. In Verbindung mit der passiven Kühlung ist somit eine gute Beherrschbarkeit einer Kernschmelze gegeben.

Zusätzlich kann eine Kühleinrichtung für das Kühlwasser im Behälter vorgesehen sein. Damit ist auch für längere Zeitbereiche eine ausreichende Kühlung gewährleistet.

Die Kühleinrichtung kann ein Entnahmerohr und ein Ablaufrohr haben, wobei das Entnahmerohr im Behälter im Bereich seiner Wasseroberfläche und das Ablaufrohr nach Art einer Beregnungseinrichtung in einem Deckenbereich der Kernreaktoranlage und/oder im Deckenbereich der Ausbreitungskammer und/oder in einem Dampfausbreitungsbereich der Ausbreitungskammer angeordnet ist. Auf diese Weise ist ein globales Kühlkonzept für die gesamte Kernreaktoranlage im Störfall gegeben. Speziell wird somit auch aufsteigender Dampf in der gesamten Anlage, insbesondere im Containment, kondensiert und dem Kühlkreislauf wieder zugeführt. Dies ist auch im Hinblick auf eine Vermeidung eines Dampfaustritts günstig. Zusätzlich wird durch die Kondensation des Dampfes der Druck im jeweiligen Raum oder Bereich vermindert. Ein Einsatz der Erfindung ist z.B. beim sogenannten EPR-Reaktor denkbar.

Weiterhin ist es auch möglich, zwischen dem Sockelkörper und den Kühlrohren eine wärmeleitende Lage, insbesondere eine Metallplatte anzuordnen. Auf diese Weise ist eine gute Wärmeverteilung in der Schicht gegeben, wobei gleichzeitig bei einem theoretischen Durchdringen von Kernschmelze die Betonstruktur zwischen den Kühlrohren geschützt ist. Die Metallplatte kann dabei auch fest mit den Kühlrohren verbunden sein, so daß ein wärmeleitender Übergang gegeben ist.

Die Erfindung, weitere Details und Vorteile werden nachfolgend anhand von Ausführungsbeispielen und der Zeichnung näher erläutert. Es zeigen:
- FIG 1: einen Ausschnitt einer Teilansicht einer Kernreaktoranlage im Längsschnitt mit einem darin angeordneten RDB entlang der Linie AA von FIG 4;
- FIG 2: die Kernreaktoranlage in einem Schnitt entlang der Linie BB von FIG 4;
- FIG 3: die Kernreaktoranlage in einem Schnitt entlang der Linie CC von FIG 4;
- FIG 4: einen Querschnitt durch eine Kernreaktoranlage im Bereich unterhalb des RDBs entlang der Linie DD in FIG 2 oder 3;
- FIG 5: eine alternative Kernreaktoranlage in einer Ansicht entsprechend FIG 3;
- FIG 6: die alternative Kernreaktoranlage in einer Ansicht entsprechend FIG 4 und
- FIG 7: eine weitere alternative Kernreaktoranlage in einer Ansicht entsprechend FIG 6 oder FIG 4.

In den nachfolgenden Figuren sind gleiche oder gleichwirkende Details - auch in unterschiedlichen Figuren unterschiedlicher Ausführungsvarianten - mit gleichen Bezugszeichen bezeichnet. Unterscheidungen sind gegebenenfalls durch Indizes gekennzeichnet. Die Beschreibung bezieht sich dabei auf mehrere Figuren einer Ausführungsform gleichzeitig, auch wenn gegebenenfalls nur eine Figur genannt ist.

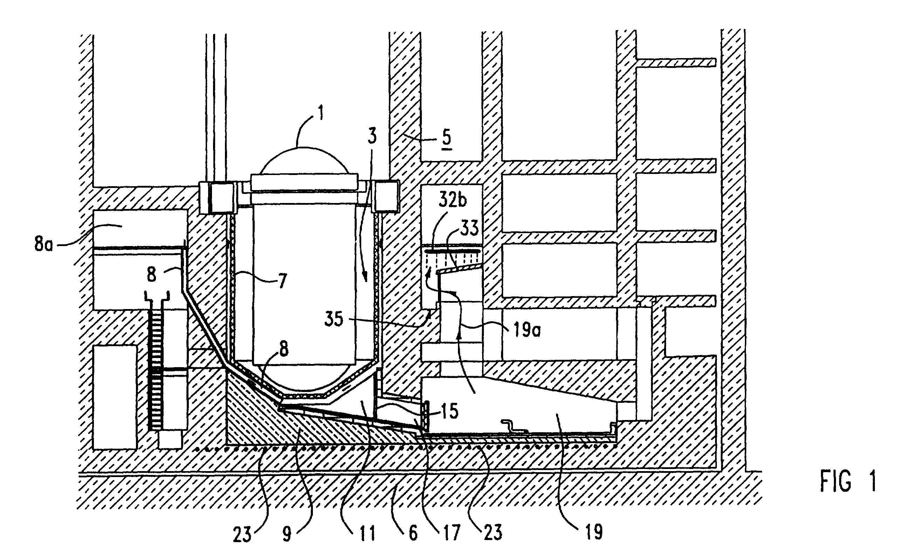

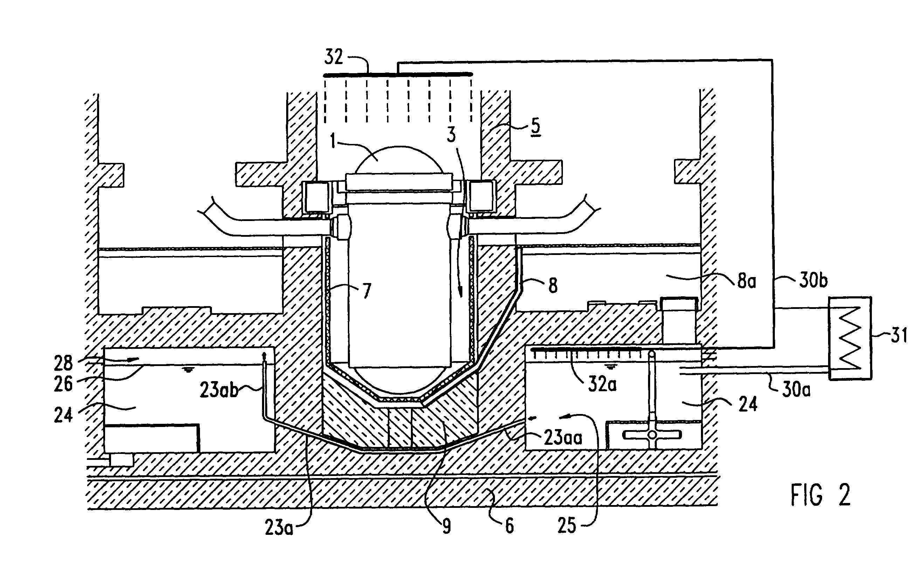

FIG 1 und 2 zeigen einen Ausschnitt einer Teilansicht einer Kernreaktoranlage im Längsschnitt, bei der ein Reaktordruckbehälter (RDB) 1 in einer Reaktorgrube 3 angeordnet ist. Die Reaktorgrube 3 ist dabei von einer Betonstruktur 5 gebildet, die gleichzeitig die Betonstruktur des Gebäudes ist. Die Betonstruktur 5 ist dabei gegebenenfalls auf einem getrennten Fundament 6 angeordnet, das sich im oder auf dem Erdreich befindet. Auf nähere Details des RDBs wird im weiteren nicht näher eingegangen - auch wenn diese (für den Fachmann klar erkennbar) in den Figuren dargestellt sind.

Zwischen der Innenwand der Reaktorgrube 3 und dem RDB 1 ist eine Isolierung 7 angeordnet, die den RDB 1 umgibt. Gegebenenfalls können die Zwischenräume zwischen der Isolierung 7 und dem RDB 1 bzw. der Wand der Reaktorgrube 3 fremdbelüftet sein, wozu über eine Belüftungsleitung 8 aus einem Lüftungsschacht 8a Luft zuführbar ist.

Der RDB 1 enthält einen nicht näher dargestellten wassergekühlten Reaktorkern. Die Reaktorgrube 3 ist im oberen Teil zylindrisch und im unteren Teil gewölbt, speziell kegelstumpfförmig, ausgebildet. Sie weist dabei eine tiegelartige Struktur auf. Die tiegelartige Ausbildung ist von einem Sokkelkörper 9 gebildet. Der zwischen dem RDB 1 und dem Sockelkörper 9 gebildete Zwischenraum, der als Vorkammer 11 zum Auffangen von Kernschmelze dient, kann gegebenenfalls auch mit einem nicht näher dargestellten Füllkörper zum Verdrängen von Wasser ausgefüllt sein.

Die Vorkammer 11 ist an ihrer tiefsten Stelle mit einer Schott- oder Trennwand 15 abgeschlossen. Die Schott- oder Trennwand 15 ist derart ausgebildet, daß sie im Störfall nach einer vorgegebenen Zeit von aus dem RDB 1 austretender Kernschmelze zerstört wird, wodurch der Weg über einen Kanal 17 in einer Ausbreitungskammer 19 freigegeben ist. Die Ausbreitungskammer 19 ist dabei seitlich neben dem RDB 1 angeordnet.

Die Ausbreitungskammer 19 dient quasi als Kühlraum und als Endlager für die Kernschmelze.

Wesentlich für die vorliegende Idee sind die Ausgestaltungen zur Kühlung des Sockelkörpers 9 und/oder des Bodenbereichs der Ausbreitungskammer 19 und des Kanals 17. Der Bodenbereich der Ausbreitungskammer 19 und der Sockelkörper 9 sind aus einem feuerfesten Material niedriger Wärmeleitfähigkeit gefertigt. Hierzu wird bevorzugt ein feuerfester Beton verwendet. Dieser ist in seiner Herstellung sehr zeit- und arbeitsaufwendig. Die Feuerfestigkeit reicht bis zu einer Temperatur von etwa 1800°C.

Gegebenenfalls kann der Sockelkörper 9 oder auch der Bodenbereich der Ausbreitungskammer 19 von nicht näher gezeigten Elementen, z.B. von kreissektor- oder kreisringsektorförmigen Elementen, die auch in Scheiben oder Lagen angeordnet sein können, gebildet sein. Dadurch ist eine gute Herstell- und Transportierbarkeit gegeben.

Zur Funktion von Vorkammer 11, Ausbreitungskanal 17 und Ausbreitungskammer 19 wird ausdrücklich auf die eingangs beschriebenen Schriften verwiesen, wobei insbesondere die in der deutschen Patentanmeldung 195 12 287.9 beschriebenen Verfahrensweisen bezüglich der Behandlung der Kernschmelze sinn-gemäß für die hier beschriebene Kernreaktoranlage gelten und zum Offenbarungsumfang dieser Beschreibung gehören.

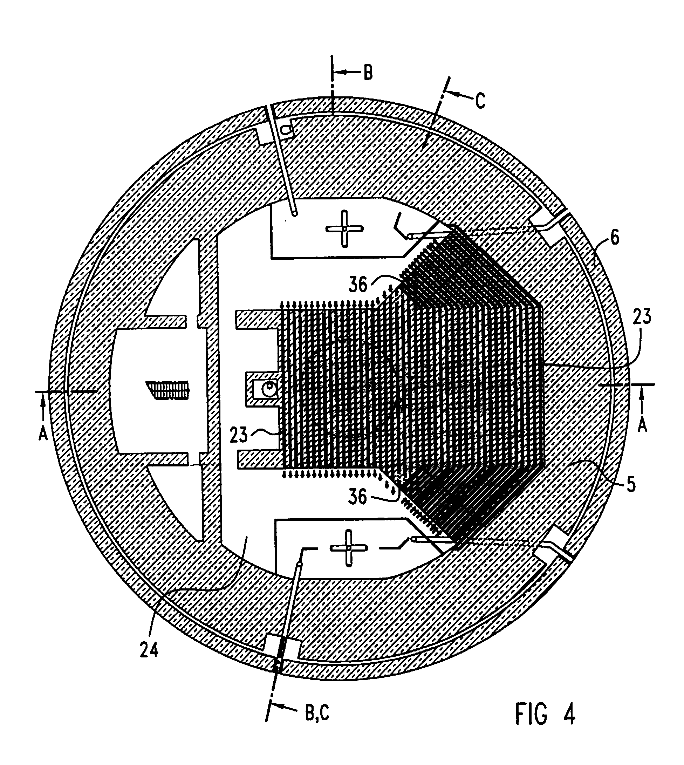

Im Grenzbereich zwischen der Betonstruktur 5 und dem Sockelkörper 9 bzw. dem Bodenbereich der Ausbreitungskammer 19 sind in der Betonstruktur 5 Kühlrohre 23 einer Kühleinrichtung angeordnet. In FIG 2 ist die Funktion der Kühleinrichtung erkennbar. Der zu kühlende Bereich ist von einem Behälter 24 umgeben (siehe auch FIG 4), der als Kühlmittelreservoir dient. Als Kühlmittel dient bevorzugt Wasser. Gegebenenfalls können auch zwei getrennte Behälter vorgesehen sein, die gegebenenfalls miteinander kommunizieren. Im normalen Betrieb kann das Kühlmittel gegebenenfalls auch für andere Zwecke, z.B. andere Kühlaufgaben, verwendet werden.

Das beispielhaft für weitere Kühlrohre der Einrichtung gezeigte Kühlrohr 23a in FIG 2 verläuft dabei mit seinem ersten Ende 23aa vom niedrigen Bodenbereich 25 in dichter Nähe unterhalb des Sockelkörpers 9 entlang in einen oberen Bereich 28 oberhalb des Wasserspiegels im Behälter 24, wo sein zweites Ende 23ab mündet. Auf diese Weise ist nämlich ein Kühlmittelfluß in nur einer Richtung gewährleistet. Mit dem Bezugszeichen 26 ist der Kühlflüssigkeitsspiegel bezeichnet.

Beim Erwärmen der Kühlflüssigkeit innerhalb des Kühlrohrs 23a am Sockelkörper 9 findet eine Dampfbildung statt, wobei durch den durch die hohe Wassersäule oberhalb des ersten Endes 23aa im unteren Bereich 25 gebildete Druck der Dampf in den oberen Bereich 28 entweicht, dort kondensiert und niederschlägt. Auf diese Weise ist ein gleichmäßiger Kühlmittelfluß in Richtung vom unteren Bereich 25 zum oberen Bereich 28 gewährleistet (siehe auch Pfeile für die Flußrichtung).

Diese Kühlung kann also ohne weitere Energiezufuhr passiv arbeiten. Der entstehende Dampf kann in den Behälter 24 entweichen und dort wieder kondensieren. Die Kühlrohre 23 können wie gezeigt bevorzugt leicht geneigt verlegt sein, so daß der Kühlmittelkreislauf verbessert ist.

Dazu ist schematisch ein Entnahmerohr 30 gezeigt, die dem Behälter 24 im Bereich der Kühlmitteloberfläche warmes Kühlmittel entzieht und einem Wärmetauscher 31 zuführt.

Das abgekühlte Kühlmittel muß anschließend dem Behälter 24 wieder zugeführt werden. Dies kann beispielsweise im Störfall derart erfolgen, daß es über die schematisch gezeigte Abregnungseinrichtung 32 (oder einfachen Sprühleitungen) über dem RDB 1 abgeregnet und über nicht näher dargestellte Kanäle in der Betonstruktur 5 dem Behälter 24 wieder zugeführt wird. Auf diese Weise ist auch eine zusätzliche Kühlung des RDB von außen gegeben.

Es kann auch im oberen Bereich 28 des Behälters 24 eine weitere Kühleinrichtung 32a ( FIG 2) nach Art einer Abregnungseinrichtung vorgesehen sein, so daß der aufsteigende Dampf kondensiert und in dem Behälter 24 abtropft. Gegebenenfalls kann auch aus der Ausbreitungskammer 19 aufsteigender Dampf (siehe Pfeil 19a in FIG 1) über ein Labyrinth 33 geführt sein, in dem dann ebenfalls eine weitere Abregnungseinrichtung 32b vorgesehen ist. Der kondensierte Dampf wird dann in einem Kanal 35 aufgefangen, und dem Behälter 24 wieder zugeführt.

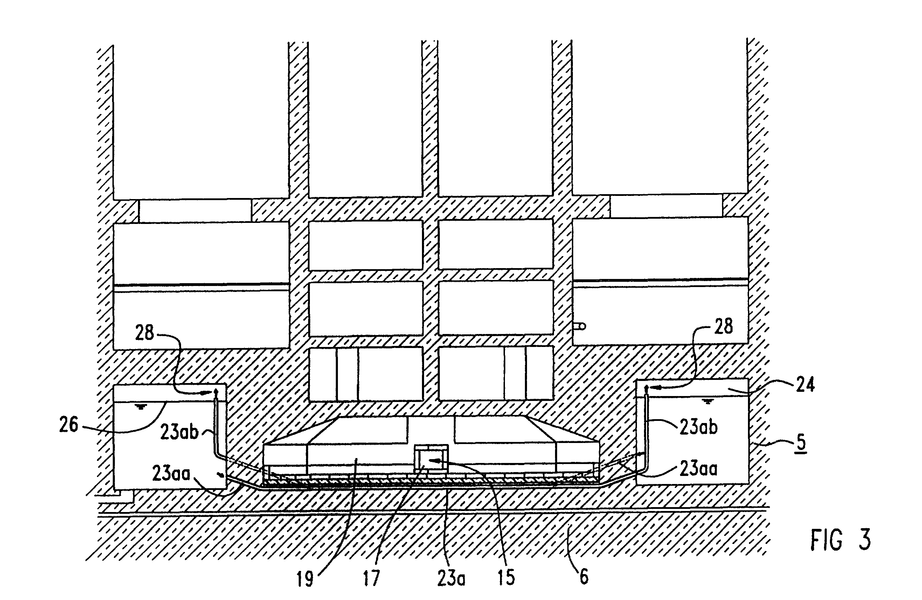

FIG 3 zeigt entsprechend FIG 2 die Führung der Rohrleitungen im Bereich der Ausbreitungskammer 19. Hier ist zu erkennen, daß die Rohrleitungen 23 für die jeweiligen Bereiche unterhalb der Ausbreitungskammer 19 und des Sockelkörpers 9 gegebenenfalls mit gegenseitiger Kühlmittelflußrichtung verlegt sind (durch die Anordnung der jeweiligen Rohrenden erkennbar). Auf diese Weise ist eine gleichmäßige Kühlmittelerwärmung gegeben.

FIG 4 zeigt einen Querschnitt durch die Betonstruktur 5 im Bereich der Grenzfläche unterhalb des Sockelkörpers 9 etwa entlang der Linie DD. Die Kühlrohre 23 sind unterhalb des Sockelkörpers 9 geradlinig ausgestaltet. Dies gilt für den Bereich der Ausbreitungskammer 19 lediglich für ihren mittleren Teil. Endseitig sind sie abgeknickt, derart, daß sie mit ihren Enden parallel in eine schräge Wand 36 der Ausbreitungskammer 19 münden. Durch die Pfeile an den Enden der Kühlrohre ist angedeutet, daß dort ebenfalls eine gegenläufige Kühlmittelflußrichtung unterhalb des Sockelkörpers 9 und der Ausbreitungskammer 19 stattfindet.

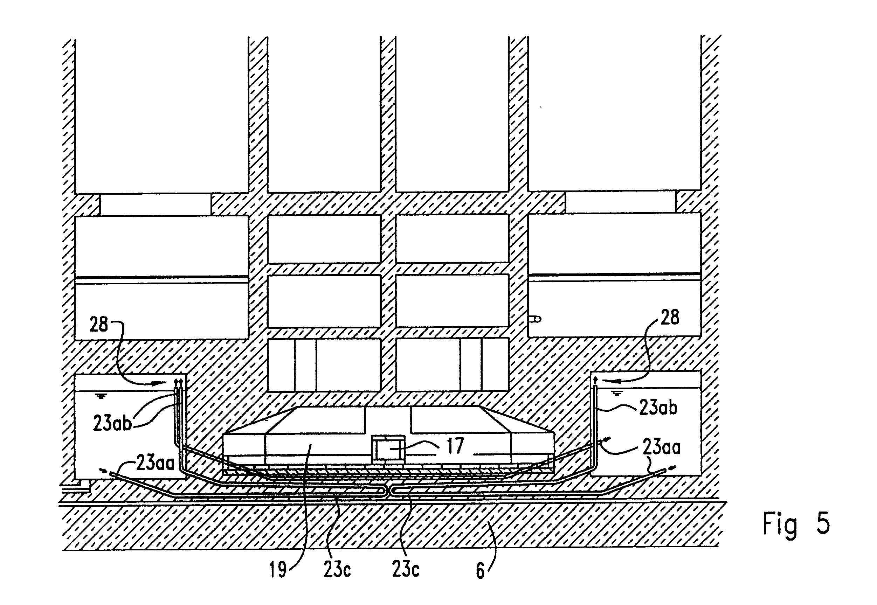

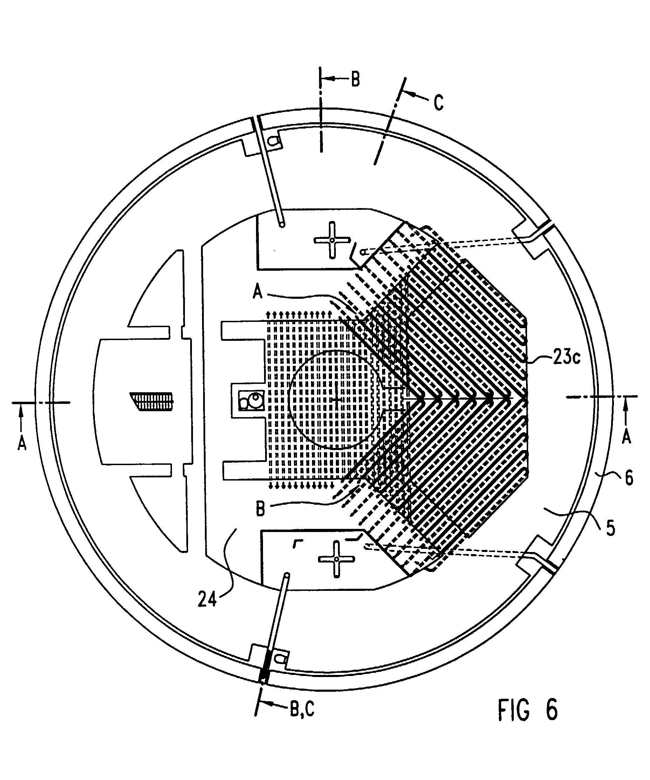

Die FIG 5 und 6 beschreiben eine alternative Ausführungsform, bei der die Kühlmittelrohre 23 anders geführt sind. Die Kühlmittelrohre 23c unterhalb der Ausbreitungskammer sind u- oder schleifenförmig verlegt, wobei ihre jeweiligen Enden nebeneinander oder parallel an der selben Seite im Behälter 24 enden. Diese Kühlmittelrohre 23c sind einfacher herstell- und verlegbar.

Wie in den FIG 5 und 6 angedeutet, können die beiden Enden eines Rohres leicht schräg zueinander versetzt angeordnet sein, so daß eine breite kühlende Schicht entsteht. Im übrigen ist hier auch gut zu erkennen, daß in gewissen überlappenden Bereiche B die Kühlrohre 23c von der Ausbreitungskammer 19 und des Sockelkörpers 9 übereinander liegen können.

Die FIG 1 und 2 gelten im übrigen für die alternativen Ausführungsformen sinngemäß.

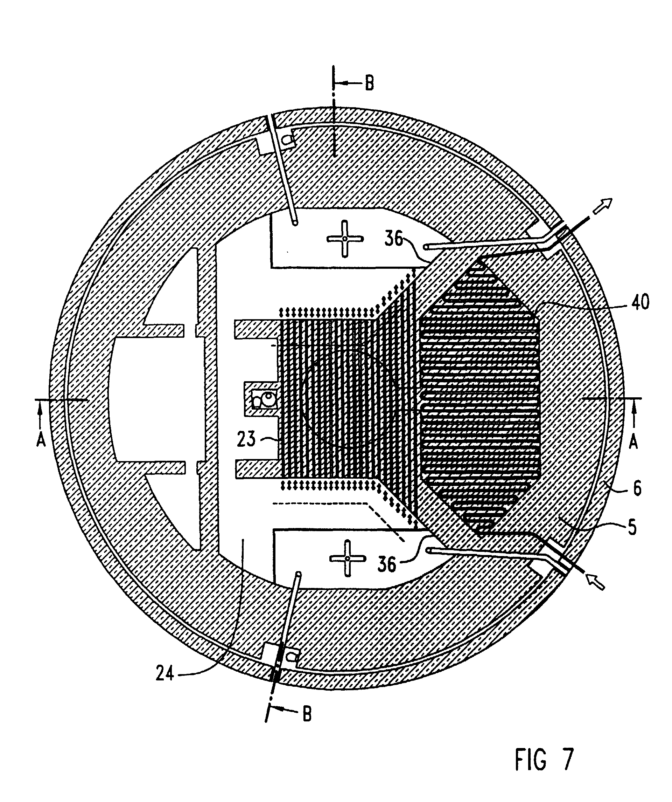

FIG 7 zeigt eine weitere alternative Ausführung, bei der lediglich der Bereich unterhalb des Sockelkörpers 9 von Kühlrohren 23, die zu einer passiven Kühleinrichtung gehören, durchsetzt ist. Der Bereich unterhalb der Ausbreitungskammer 19 ist von einer Kühlschlange 40 durchsetzt, die mit einer nicht näher gezeigten Kühleinrichtung verbunden ist.

Hier ist beispielsweise eine zusätzliche aktive Kühlung denkbar, die unter Umständen auch steuerbar ist. Damit kann durch eine entsprechende Steuerung für die ausgeflossene Kernschmelze eine spezielle Kühlung, gegebenenfalls nach einem bestimmten Programm, durchgeführt werden. Dies ist insbesondere für einen Langzeitbereich von großem Interesse. In den Figuren 4,6 und 7 sind auch nicht näher bezeichnete Details gezeigt, die speziell den Behälter 24 und seinen Kühlmittelzu- oder -ablauf betreffen und für den Fachmann für sich sprechen.

Prinzipiell ist auch eine aktive Kühlung des Sockelkörpers und der Ausbreitungskammer denkbar, wobei dann eine spezielle Dimensionierung der gesamten Kühleinrichtung, insbesondere der Kühlrohre, vorzusehen ist, da bei einer aktiven Kühlung mehr Wärme abgeführt werden kann. Dazu können die Kühlrohre beispielsweise in größeren Abständen zueinander und/oder in einer tieferen Lage in der Betonstruktur verlegt sein. Es können auch verschiedene Kühlstrategien oder -verfahren vorgesehen sein. Beispielsweise kann es sinnvoll sein, erst nach einer bestimmten Wartezeit nach einem Störfall mit der aktiven Kühlung zu beginnen. Diese Verfahrensweise eignet sich für den Fall, wenn die sich ausbreitende Kernschmelze von oben mittels einer Sprüheinrichtung gekühlt wird.

Selbstverständlich sind beliebige Kombinationen der oben beschriebenen Merkmale im Rahmen des fachmännischen Könnens denkbar, ohne daß der Grundgedanke der vorliegenden Idee verlassen wird.

## Patentansprüche

1. Kernreaktoranlage mit
• einem Reaktordruckbehälter (1),
• einem unterhalb des Reaktordruckbehälters angeordneten Sockelkörper (9), der den Bodenbereich einer Vorkammer (11) zum Auffangen von Kernschmelze bildet, und
• einer seitlich neben dem Reaktordruckbehälter (1), angeordneten Ausbreitungskammer (19) für die Kernschmelze,
wobei der Sockelkörper (9) und der Bodenbereich der Ausbreitungskammer (19) aus Beton gefertigt und auf einer Betonstruktur (5) angeordnet sind, dadurch gekennzeichnet, daß die Betonstruktur (5) im Grenzbereich zum Sockelkörper (9) und/oder zum Bodenbereich der Ausbreitungskammer (19) von einer Vielzahl von Kühlrohren (23,23a,23c) durchsetzt ist, daß die Kühlrohre (23,23a,23c) endseitig mit einem Behälter (24) für Kühlmittel verbunden sind, und daß eine Kühleinrichtung für das Kühlmittel im Behälter (24) vorgesehen ist.

2. Kernreaktoranlage nach Anspruch 1, wobei die Kühlrohre (23,23a,23c) jeweils mit ihrem einen Ende unterhalb des tiefsten möglichen Kühlmittelspiegels (26) und mit ihrem anderen Ende (23ab) oberhalb des höchsten möglichen Kühlmittelspiegels (26) im Behälter (24) enden.

3. Kernreaktoranlage nach Anspruch 1 oder 2, wobei die Kühlrohre (23,23a,23c) parallel nebeneinander liegen und wechselweise eine entgegengesetzte Durchflußrichtung haben.

4. Kernreaktoranlage nach Anspruch 1, 2 oder 3, wobei der Behälter (24) den zu kühlenden Bereich des Sockelkörpers (9) und der Ausbreitungskammer (19) in Umfangsrichtung zumindest teilweise umschließt.

5. Kernreaktoranlage nach Anspruch 4, wobei die Kühlrohre (23,23a,23c) den zu kühlenden Bereich etwa gerade oder bogenförmig durchsetzen und die beiden jeweiligen Enden der jeweiligen Kühlrohre (23,23a,23c) auf gegenüberliegenden Seiten des zu kühlenden Bereichs im Behälter (24) enden.

6. Kernreaktoranlage nach einem der Ansprüche 1 bis 4, wobei die Kühlrohre (23,23a,23c) den zu kühlenden Bereich etwa u-förmig durchsetzen und ihre beiden Enden auf derselben Seite des zu kühlenden Bereichs im Behälter (24) enden.

7. Kernreaktoranlage nach einem der Ansprüche 1 bis 6, wobei die Kühlrohre (23,23a,23c) zumindest teilweise geneigt verlegt sind.

8. Kernreaktoranlage nach einem der Ansprüche 1 bis 7, wobei der Beton feuerfest ist.

9. Kernreaktoranlage nach einem der Ansprüche 1 bis 8, wobei die Kühleinrichtung ein Entnahmerohr (30a) und ein Ablaufrohr (30b) hat, wobei das Entnahmerohr (30a) im Behälter (24) unterhalb des tiefsten möglichen Kühlmittelspiegels (26) und das Ablaufrohr (30b) nach Art einer Beregnungseinrichtung (32) in einem Deckenbereich der Kernreaktoranlage und/oder im Deckenbereich der Ausbreitungskammer (19) und/oder in einem Dampfausbreitungsbereich der Ausbreitungskammer (19) angeordnet ist.

10. Kernreaktoranlage nach einem der vorhergehenden Ansprüche, wobei als Kühlmittel Wasser dient.

11. Kernreaktoranlage nach einem der vorhergehenden Ansprüche, wobei zwischen dem Sockelkörper (9) und den Kühlrohren (23,23a,23c) eine wärmeleitende Lage, insbesondere eine Metallplatte, angeordnet ist.

## Claims

1. Nuclear reactor plant with
• a reactor pressure vessel (1),
• a base unit (9) which is arranged below the reactor pressure vessel and forms the bottom region of a prechamber (11) for collecting core melt, and
• a spreading chamber (19) for the core melt, which is arranged laterally next to the reactor pressure vessel (1),
the base unit (9) and the bottom region of the spreading chamber (19) being made of concrete and being arranged on a concrete structure (5), characterized in that
a multiplicity of cooling tubes (23, 23a, 23c) passes through the concrete structure (5) in the region adjoining the base unit (9) and/or the bottom region of the spreading chamber (19), in that the cooling tubes (23, 23a, 23c) are connected at the end to a vessel (24) for coolant, and in that a cooling device is provided for the coolant in the vessel (24).

2. Nuclear reactor plant according to Claim 1, the cooling tubes (23, 23a, 23c) respectively ending with one of their ends below the lowest possible coolant surface (26) and with the other of their ends (23ab) above the highest possible coolant surface (26) in the vessel (24) .

3. Nuclear reactor plant according to Claim 1 or 2, the cooling tubes (23, 23a, 23c) being in parallel next to each other and alternately having an opposite flow direction.

4. Nuclear reactor plant according to Claim 1, 2 or 3, the vessel (24) at least partially enclosing in the circumferential direction that region of the base unit (9) and of the spreading chamber (19) which is to be cooled.

5. Nuclear reactor plant according to Claim 4, the cooling tubes (23, 23a, 23c) passing through the region to be cooled approximately in a straight line or in a curve, and the two respective ends of the respective cooling tubes (23, 23a, 23c) ending in the vessel (24) on opposite sides of the region to be cooled.

6. Nuclear reactor plant according to one of Claims 1 to 4, the cooling tubes (23, 23a, 23c) passing through the region to be cooled approximately in a U-shape, and their two ends ending in the vessel (24) on the same side of the region to be cooled.

7. Nuclear reactor plant according to one of Claims 1 to 6, the cooling tubes (23, 23a, 23c) being at least partly inclined.

8. Nuclear reactor plant according to one of Claims 1 to 7, the concrete being refractory.

9. Nuclear reactor plant according to one of Claims 1 to 8, the cooling device having an intake tube (30a) and a discharge tube (30b), the intake tube (30a) being arranged in the vessel (24) below the lowest possible coolant surface (26), and the discharge tube (30b) in the manner of a sprinkler device (32), being arranged in a roof region of the nuclear reactor plant and/or in the roof region of the spreading chamber (19) and/or in a steam accumulation region of the spreading chamber (19).

10. Nuclear reactor plant according to one of the preceding claims, water being used as coolant.

11. Nuclear reactor plant according to one of the preceding claims, a thermally conductive layer, in particular a metal plate, being arranged between the base unit (9) and the cooling tubes (23, 23a, 23c).

## Revendications

1. Installation d'un réacteur nucléaire comprenant
• une cuve de réacteur (1),
• un corps de socle (9) situé sous la cuve de réacteur et qui forme la zone de fond d'une préchambre (11) servant à récupérer les produits de fusion du coeur, et
• une chambre de propagation (19) pour les produits de fusion du coeur, située latéralement près de la cuve de réacteur (1),
le corps de socle (9) et la zone de fond de la chambre de propagation (19) étant fabriqués en béton et étant situés sur une structure en béton (5),
caractérisée en ce que la structure en béton (5) est traversée par une pluralité de tuyaux de refroidissement (23, 23a, 23c) dans la zone limite avec le corps de socle (9) et/ou avec la zone de fond de la chambre de propagation (19), en ce que les tuyaux de refroidissement (23, 23a, 23c) sont reliés, du côté de leurs extrémités, à un réservoir (24) pour un produit refroidisseur et en ce qu'un dispositif de refroidissement pour le produit refroidisseur est prévu dans le réservoir (24).

2. Installation d'un réacteur nucléaire selon la revendication 1, les tuyaux de refroidissement (23, 23a, 23c) se terminant à chaque fois sous le niveau (26) le plus bas possible de produit refroidisseur avec une de leurs extrémités et au-dessus du niveau (26) le plus haut possible de produit refroidisseur dans le réservoir (24) avec leur autre extrémité (23ab).

3. Installation d'un réacteur nucléaire selon l'une des revendications 1 ou 2, les tuyaux de refroidissement (23, 23a, 23c) étant parallèles les uns par rapport aux autres et présentant alternativement un sens de passage contraire.

4. Installation d'un réacteur nucléaire selon l'une des revendications 1, 2 ou 3, le réservoir (24) entourant, au moins partiellement dans la direction circonférentielle, la zone à refroidir du corps de socle (9) et de la chambre de propagation (19).

5. Installation d'un réacteur nucléaire selon la revendication 4, les tuyaux de refroidissement (23, 23a, 23c) traversant la zone à refroidir de manière à peu près rectiligne ou courbée et les deux extrémités respectives des tuyaux de refroidissement respectifs (23, 23a, 23c) se terminant sur les côtés opposés de la zone à refroidir dans le réservoir (24).

6. Installation d'un réacteur nucléaire selon l'une des revendications 1 à 4, les tuyaux de refroidissement (23, 23a, 23c) traversant la zone à refroidir en formant à peu près un U et leurs deux extrémités se terminant sur le même côté de la zone à refroidir dans le réservoir (24).

7. Installation d'un réacteur nucléaire selon l'une des revendications 1 à 6, les tuyaux de refroidissement (23, 23a, 23c) étant posés, au moins partiellement, de manière inclinée.

8. Installation d'un réacteur nucléaire selon l'une des revendications 1 à 7, le béton étant réfractaire.

9. Installation d'un réacteur nucléaire selon l'une des revendications 1 à 8, le dispositif de refroidissement comprenant un tuyau de prise (30a) et un tuyau d'écoulement (30b), le tuyau de prise (30a) étant situé dans le réservoir (24) sous le niveau (26) le plus bas possible de produit refroidisseur et le tuyau d'écoulement (30b) étant situé à la manière d'un dispositif d'arrosage (32) dans une région du plafond de l'installation de réacteur nucléaire et/ou dans la région du plafond de la chambre de propagation (19) et/ou dans une zone de propagation de vapeur de la chambre de propagation (19).

10. Installation d'un réacteur nucléaire selon l'une des revendications précédentes, l'eau servant de produit refroidisseur.

11. Installation d'un réacteur nucléaire selon l'une des revendications précédentes, une couche conductrice de chaleur, notamment une plaque métallique, étant située entre le corps de socle (9) et les tuyaux de refroidissement (23, 23a, 23c).
